# EUROPÄISCHE PATENTANMELDUNG

(11) **EP 4 685 593 A1**
(43) Veröffentlichungstag der Anmeldung: **28.01.2026**
(21) Anmeldenummer: 25191218.4
(22) Anmeldetag: 23.07.2025
(51) Int. Cl.: G05B 19/418

(54) **VERFAHREN ZUM DIAGNOSTIZIEREN EINER STÖRUNG DES BETRIEBS EINER VERPACKUNGSMASCHINE**

(30) Priorität: 26.07.2024 DE 102024121305
(71) Anmelder: MULTIVAC Sepp Haggenmüller SE & Co. KG, 87787 Wolfertschwenden (DE)
(72) Erfinder: ADEMANN, Philipp, 87439 Kempten (DE); BLOCHUM, Sebastian, 87600 Kaufbeuren (DE); GRONDINGER, Bastian, 87640 Biessenhofen (DE); MUMMENHOFF, Andreas, 87463 Dietmannsried (DE); WÄGELE, Markus, 87763 Lautrach (DE)
(74) Vertreter: Grünecker Patent- und Rechtsanwälte PartG mbB

(57) **Zusammenfassung**

Ein Verfahren zum Diagnostizieren einer Störung des Betriebs einer Verpackungsmaschine (1), die eine Anzeigevorrichtung (19) umfasst. Das Verfahren umfasst Anzeigen einer Lokalisierungsansicht (33) durch die Anzeigevorrichtung (19), wobei die Lokalisierungsansicht (33) eine erste Lokalisierungseingabe (34) eines Benutzers erfordert, und wobei die erste Lokalisierungseingabe (34) einen Fehlerort lokalisiert. Das Verfahren umfasst des Weiteren Zusammenstellen einer Vergleichsansicht (37) basierend auf der ersten Lokalisierungseingabe (34) des Benutzers, wobei die Vergleichsansicht (37) eine oder mehrere Repräsentationen (38) jeweils einer durch die Verpackungsmaschine (1) bearbeitbaren Verpackung (21) oder Verpackungskomponente mit einem Fehler umfasst, und Anzeigen der Vergleichsansicht (37) durch die Anzeigevorrichtung (19), wobei die Vergleichsansicht (37) eine Vergleichsauswahl (39) des Benutzers erfordert, und wobei die Vergleichsauswahl (39) eine aus der einen oder mehreren Repräsentationen (38) angibt. Das Verfahren umfasst des Weiteren Anzeigen mindestens eines Störungsbehebungsvorschlags (40) basierend auf der Vergleichsauswahl (39) durch die Anzeigevorrichtung (19).

## Beschreibung

Die Erfindung bezieht sich auf Verfahren zum Diagnostizieren von Störungen des Betriebs von Verpackungsmaschinen.

Es ist bekannt, den Betrieb von Verpackungsmaschinen durch verschiedene Sensoren oder ähnliche Systeme zu überwachen und Störungen des Betriebs zu erkennen. Aus der DE 10 2019 206 389 A1 ist bspw. ein Verfahren bekannt, durch welches anhand einer Auswertung verschiedener Sensorsignale eine Fehlstellung eines Werkzeugs erkannt werden kann.

Manche Störungen des Betriebs von Verpackungsmaschinen äußern sich jedoch durch Phänomene, die durch Sensoren gar nicht oder nicht ausreichend erfassbar sind. Bspw. können durch Tiefziehverpackungsmaschinen geformte Verpackungsmulden nach dem Formen durch Drucktesten auf Dichtigkeit geprüft werden. Es kann jedoch sein, dass eine solche Erkennung einer Undichtigkeit allein nicht ausreichend ist, um die Ursache effizient zu identifizieren.

Es ist eine Aufgabe der Erfindung, ein verbessertes Verfahren zum Diagnostizieren von Störungen des Betriebs von Verpackungsmaschinen anzugeben. Diese Aufgabe wird gelöst durch ein Verfahren mit den Merkmalen des Anspruchs 1.

Es wird ein Verfahren zum Diagnostizieren einer Störung des Betriebs einer Verpackungsmaschine, die eine Anzeigevorrichtung umfasst, offenbart. Das Verfahren umfasst ein Anzeigen einer Lokalisierungsansicht durch die Anzeigevorrichtung, wobei die Lokalisierungsansicht eine erste Lokalisierungseingabe eines Benutzers erfordert, und wobei die erste Lokalisierungseingabe einen Fehlerort lokalisiert, und Zusammenstellen einer Vergleichsansicht basierend auf der ersten Lokalisierungseingabe des Benutzers, wobei die Vergleichsansicht eine oder mehrere Repräsentationen jeweils einer durch die Verpackungsmaschine bearbeitbaren Verpackung mit einem Fehler umfasst. Das Verfahren umfasst des Weiteren ein Anzeigen der Vergleichsansicht durch die Anzeigevorrichtung, wobei die Vergleichsansicht eine Vergleichsauswahl des Benutzers erfordert, und wobei die Vergleichsauswahl eine aus der einen oder mehreren Repräsentationen angibt. Des Weiteren umfasst das Verfahren ein Anzeigen mindestens eines Störungsbehebungsvorschlags basierend auf der Vergleichsauswahl durch die Anzeigevorrichtung.

Als Störung können Umstände angesehen werden, die dazu führen, dass ein Arbeitsergebnis der Verpackungsmaschine nicht optimal ausfällt. Darunter können Umstände verstanden werden, die eine sofortige Unterbrechung des Betriebs der Verpackungsmaschine erfordern. Als Störung können jedoch auch Umstände verstanden werden, die lediglich zu einem nicht optimalen Ergebnis führen, welches durch Behebung der Störung verbessert werden könnte. Z. B. könnte eine Störung zu einer Verpackung führen, die zwar noch weiterverarbeitungsfähig und/oder verkaufsfähig ist, aber durch Behebung der Störung noch optimiert werden könnte. Entsprechend können unter Störungsbehebungsvorschlägen Maßnahmen verstanden werden, welche eine Wiederaufnahme des Betriebs der Verpackungsmaschine nach einer durch eine Störung verursachten Betriebsunterbrechung und/oder eine Verbesserung und/oder Optimierung des Betriebs und/oder der Arbeitsergebnisse der Verpackungsmaschine bewirken können.

Durch die Berücksichtigung der ersten Lokalisierungseingabe und der Vergleichsauswahl des Benutzers kann eine Störungsursache genauer bestimmbar sein. Bei dem bereits erwähnten Beispiel der Erkennung einer Undichtigkeit kann z. B. der Benutzer durch die erste Lokalisierungseingabe den Ort eines Risses in der geformten Verpackungsmulde angeben, bspw. anhand einer grafischen Darstellung der durch die Verpackungsmaschine verarbeitbaren Verpackung. Basierend auf der ersten Lokalisierungseingabe kann die Vergleichsansicht zusammengestellt werden, die z. B. grafische Darstellungen von unterschiedlichen Rissformen umfassen kann. Anschließend kann der Benutzer durch die Vergleichsauswahl die grafische Darstellung einer Rissform angeben, welche der Rissform an der fehlerhaften Verpackungsmulde am nächsten kommt. Anhand der Lokalisierung und der Form des Risses kann die Störungsursache, wie z. B. ungeeigneter Formdruck, ungeeignete Formtemperatur oder Beschädigung des Formwerkzeugs, genau bestimmbar, zumindest aber genauer eingrenzbar sein.

Die vorstehend und im Folgenden beschriebenen Eingaben können auf unterschiedliche Art und Weise erfolgen. Z. B. ist es denkbar, dass die Anzeigevorrichtung ein Eingabeelement oder mehrere Eingabeelemente umfasst, die jeweils dazu konfiguriert sein können, Eingaben eines Benutzers zu empfangen. Als Eingabeelemente können bspw. Knöpfe, Hebel Tasten, Taster, Touchscreens, Kameras oder Mikrofone oder verschiedene Kombinationen der genannten angesehen werden. Die Eingabeelemente können dazu konfiguriert sein, auf unterschiedliche Art und Weise Benutzereingaben zu empfangen, bspw. durch mechanische Betätigung durch den Benutzer, Erfassen einer Berührung des Nutzers, Erfassen eines durch einen Benutzer erzeugten Tons, bspw. eines Sprachbefehls, oder durch Erfassen einer durch den Benutzer ausgeführten Geste.

Als Verpackungsmaschine können Vorrichtungen und Anlagen angesehen werden, die zum Erzeugen von Verpackungen und/oder Verpackungskomponenten konfiguriert sind. Darunter können insbesondere Verpackungsmaschinen oder -anlagen inkl. aller ihrer Stationen wie z. B. Formstation, Leckageerkennungsstation, Siegelstation und/oder Schneidstation verstanden werden. Als Teil oder Komponente einer Verpackungsmaschine können außerdem Zusätzliche Vorrichtungen und/oder Hilfsvorrichtungen angesehen werden, welche ergänzende Funktionen ausführen können, z. B. Etikettiervorrichtungen, Etikettendrucker oder Druckvorrichtungen. Entsprechend können zusätzlich zu dem Verpackungsbehälter, welcher das eigentliche Produkt enthält, und seinen Komponenten weitere zur Verpackung gehörige Elemente, wie z. B. Etiketten und/oder Manschetten als Verpackungskomponente angesehen werden.

Je nachdem welche Art von Lokalisierungseingabe die Lokalisierungsansicht erfordert, kann die Lokalisierungsansicht unterschiedlich gestaltet sein. Erfordert die Lokalisierungsansicht bspw. eine auf eine Maschinenkomponente der Verpackungsmaschine bezogene Lokalisierungseingabe, kann die Lokalisierungsansicht z. B. eine Lokalisierungsrepräsentation der Verpackungsmaschine umfassen. Eine Lokalisierungsrepräsentation der Verpackungsmaschine kann bspw. eine grafische Darstellung der Verpackungsmaschine und/oder Teilen davon und/oder eine textliche Beschreibung und/oder eine Liste textlicher Beschreibungen verschiedener Maschinenkomponenten umfassen.

Erfordert die Lokalisierungsansicht eine auf eine durch die Verpackungsmaschine bearbeitbare Verpackung bezogene Lokalisierungseingabe, kann die Lokalisierungsansicht z. B. eine Lokalisierungsrepräsentation der Verpackung und/oder Teilen und/oder Komponenten der durch die Verpackungsmaschine bearbeitbaren Verpackung umfassen. Eine Lokalisierungsrepräsentation der durch die Verpackungsmaschine bearbeitbaren Verpackung kann bspw. eine grafische Darstellung der Verpackung und/oder Teilen davon und/oder eine textliche Beschreibung und/oder eine Liste textlicher Beschreibungen verschiedener Teile oder Komponenten der Verpackung umfassen.

Vorteilhafterweise kann jede der einen oder mehreren Repräsentationen einer durch die Verpackungsmaschine bearbeitbaren Verpackung mit einem Fehler eine grafische Darstellung jeweils einer durch die Verpackungsmaschine bearbeitbaren Verpackung mit einem Fehler umfassen. Alternativ oder zusätzlich kann jede der einen oder mehreren Repräsentationen einer durch die Verpackungsmaschine bearbeitbaren Verpackung mit einem Fehler eine Textbeschreibung jeweils einer durch die Verpackungsmaschine bearbeitbaren Verpackung mit einem Fehler umfassen.

Die Lokalisierungsansicht kann bspw. erfordern, dass die erste Lokalisierungseingabe eine auf eine Maschinenkomponente der Verpackungsmaschine bezogene Lokalisierungseingabe des Benutzers umfasst. Als eine auf eine Maschinenkomponente der Verpackungsmaschine bezogene Lokalisierungseingabe kann z.B. eine Angabe angesehen werden, an welcher Maschinenkomponente eine Störung und/oder eine fehlerhafte Verpackung auftritt. Bspw. kann die Maschinenkomponente anhand einer grafischen Darstellung der Verpackungsmaschine oder durch Auswahl aus einer Liste angegeben werden.

Zusätzlich oder alternativ kann die Lokalisierungsansicht erfordern, dass die erste Lokalisierungseingabe eine auf eine durch die Verpackungsmaschine bearbeitbare Verpackung bezogene Lokalisierungseingabe des Benutzers umfasst. Die Lokalisierungseingabe kann auf die fertige Verpackung oder auf Vorstufen der fertigen Verpackung bzw. Komponenten der Verpackung bezogen sein, bspw. auf eine Verpackungsschale und/oder eine Verpackungsmulde und/oder Deckfolie. Als eine auf eine durch die Verpackungsmaschine bearbeitbare Verpackung bezogene Lokalisierungseingabe kann z. B. eine Angabe angesehen werden, wo an der durch die Verpackungsmaschine bearbeitbaren Verpackung bzw. an welchem Fehlerort ein Fehler auftritt und/oder welche Art von Fehler auftritt. Als Fehlerort kann bspw. eine Verpackungsschale und/oder eine Verpackungsmulde und/oder Deckfolie und/oder eine Siegelnaht und/oder eine Muldenwand und/oder ein Muldenboden und/oder eine Schalenwand und/oder ein Schalenboden angebbar sein. Als Art von Fehler kann bspw. ein Riss und/oder eine Risslänge und/oder eine unerwünschte Verformung und/oder eine unvollständige Siegelnaht angebbar sein.

Das Verfahren kann des Weiteren Anzeigen einer zweiten Lokalisierungsansicht durch die Anzeigevorrichtung umfassen, wobei die zweite Lokalisierungsansicht eine zweite Lokalisierungseingabe des Benutzers erfordern kann, und wobei die zweite Lokalisierungseingabe einen Fehlerort lokalisieren kann. Durch eine zweite Lokalisierungsansicht kann es z. B. ermöglicht werden, eine auf eine Maschinenkomponente der Verpackungsmaschine bezogene Lokalisierungseingabe und eine auf eine durch die Verpackungsmaschine bearbeitbare Verpackung bezogene Lokalisierungseingabe auf separate Lokalisierungsansichten zu verteilen. Bspw. kann bei einem Zusammenstellen der zweiten Lokalisierungsansicht die erste Lokalisierungseingabe berücksichtigt werden. Das Verfahren kann Zusammenstellen der zweiten Lokalisierungsansicht basierend auf der ersten Lokalisierungseingabe umfassen. In Ausführungen, in denen eine erste und eine zweite Lokalisierungseingabe erfordert wird, kann das Verfahren Zusammenstellen der Vergleichsansicht basierend auf der ersten und/oder der zweiten Lokalisierungseingabe umfassen.

Die zweite Lokalisierungsansicht kann erfordern, dass die zweite Lokalisierungseingabe eine auf eine Maschinenkomponente der Verpackungsmaschine und/oder auf eine durch die Verpackungsmaschine bearbeitbare Verpackung bezogene Lokalisierungseingabe des Benutzers umfasst. Bzgl. der auf eine Maschinenkomponente der Verpackungsmaschine und der auf eine durch die Verpackungsmaschine bearbeitbare Verpackung bezogenen Lokalisierungseingaben des Benutzers sind die obigen Erläuterungen mit Bezug auf die erste Lokalisierungseingabe analog anwendbar.

Das Verfahren kann des Weiteren Erfassen eines Ist-Wertes oder mehrerer Ist-Werte eines Betriebsparameters oder mehrerer Betriebsparameter der Verpackungsmaschine umfassen. Als Betriebsparameter können bspw. ein Druck oder mehrere Drücke angesehen werden, wie z. B. ein Formdruck und/oder ein Evakuierungsdruck und/oder ein Begasungsdruck. Alternativ oder zusätzlich können eine Temperatur oder mehrere Temperaturen als Betriebsparameter angesehen werden, wie z. B. eine Formtemperatur und/oder eine Siegeltemperatur. Das Erfassen des Ist-Wertes des Betriebsparameters kann basierend auf der ersten und/oder der zweiten Lokalisierungseingabe und/oder basierend auf der Vergleichsauswahl erfolgen. Alternativ oder zusätzlich kann eine Auswahl, welcher Betriebsparameter erfasst wird, basierend auf der ersten und/oder der zweiten Lokalisierungseingabe und/oder basierend auf der Vergleichsauswahl erfolgen.

Besonders günstig kann es sein, wenn das Anzeigen des mindestens einen Störungsbehebungsvorschlags und/oder das Zusammenstellen der ersten oder zweiten Lokalisierungsansicht und/oder das Zusammenstellen der Vergleichsansicht basierend auf dem erfassten Ist-Wert des Betriebsparameters erfolgt.

Vorteilhafterweise kann das Anzeigen des mindestens einen Störungsbehebungsvorschlags Anzeigen des Ist-Wertes des Betriebsparameters umfassen. Das Anzeigen des Ist-Wertes im Rahmen des Anzeigens des Störungsbehebungsvorschlags kann basierend auf und/oder abhängig von der ersten und/oder der zweiten Lokalisierungseingabe und/oder basierend auf und/oder abhängig von der Vergleichsauswahl erfolgen.

Es kann vorteilhaft sein, wenn das Anzeigen des mindestens einen Störungsbehebungsvorschlags Anzeigen eines Änderungsvorschlags des Betriebsparameters umfasst. Bspw. kann der Änderungsvorschlag eine Erhöhung oder eine Reduzierung des Betriebsparameters und/oder einer Maschineneinstellung, welche den Betriebsparameter beeinflussen kann, umfassen. Z. B. kann ein Anzeigen eines Störungsbehebungsvorschlags das Anzeigen einer Formtemperatur als Ist-Wert eines Betriebsparameters und eine Erhöhung der Heizleistung einer Heizvorrichtung eines Formwerkzeugs als Änderungsvorschlag einer Maschineneinstellung umfassen.

Die Anmeldung bezieht sich auch auf eine Verpackungsmaschine, die zum Ausführen eines Verfahrens nach einem der vorangehenden Ansprüche konfiguriert ist. Die Verpackungsmaschine umfasst eine Anzeigevorrichtung. Die Verpackungsmaschine kann des Weiteren ein Eingabeelement oder mehrere Eingabeelemente umfassen. Bspw. kann die Verpackungsmaschine, insbesondere die Anzeigevorrichtung einen Berührungssensor umfassen, sodass die Anzeigevorrichtung als berührungsempfindliche Anzeige ausgeführt sein kann.

Die Verpackungsmaschine kann des Weiteren eine Verarbeitungseinheit umfassen. Die Verarbeitungseinheit kann mit der Anzeigevorrichtung verbunden sein. Die Verarbeitungseinheit kann dazu konfiguriert sein, mit der Anzeigevorrichtung derart zusammenzuwirken, dass die verschiedenen oben erläuterten Ansichten angezeigt werden. Des Weiteren kann die Verarbeitungseinheit dazu konfiguriert sein, das Zusammenstellen der verschiedenen Ansichten und/oder Vorschlägen ggf. basierend auf den verschiedenen Eingaben und/oder Auswahlen auszuführen. Zusätzlich kann die Verarbeitungseinheit dazu konfiguriert sein, den einen oder die mehreren Betriebsparameter zu erfassen und/oder Signale zu empfangen, die durch andere Komponenten der Verpackungsmaschine erfasste Betriebsparameter repräsentieren. Außerdem kann die Verarbeitungseinheit dazu konfiguriert sein, Maschineneinstellungen zu ändern und/oder Signale zu erzeugen, die andere Komponenten der Verpackungsmaschine zu einer Veränderung von Maschineneinstellungen veranlassen, bspw. basierend auf einer Auswahleingabe des Benutzers, die eine Auswahl eines Störungsbehebungsvorschlags angeben kann. Die Verarbeitungseinheit kann z. B. einen Computer umfassen. Die Verarbeitungseinheit kann in eine Steuerungseinheit der Verpackungsmaschine integriert sein.

Die Erfindung bezieht sich auf ein Verfahren zum Diagnostizieren einer Störung des Betriebs einer Verpackungsmaschine der vorstehend beschriebenen Art. Im Folgenden wird eine vorteilhafte Ausführung beispielhaft anhand von Zeichnungen näher erläutert.
Figur 1 zeigt eine schematische Seitenansicht einer Verpackungsmaschine.
Figur 2 zeigt eine schematische Ansicht einer Anzeigevorrichtung der Verpackungsmaschine aus Figur 1, welche eine erste Lokalisierungsansicht anzeigt.
Figur 3 zeigt eine schematische Ansicht einer Anzeigevorrichtung der Verpackungsmaschine aus Figur 1, welche eine zweite Lokalisierungsansicht anzeigt.
Figur 4 zeigt eine schematische Ansicht einer Anzeigevorrichtung der Verpackungsmaschine aus Figur 1, welche eine Vergleichsansicht anzeigt.
Figur 5 zeigt eine schematische Ansicht einer Anzeigevorrichtung der Verpackungsmaschine aus Figur 1, welche einen Störungsbehebungsvorschlag anzeigt.

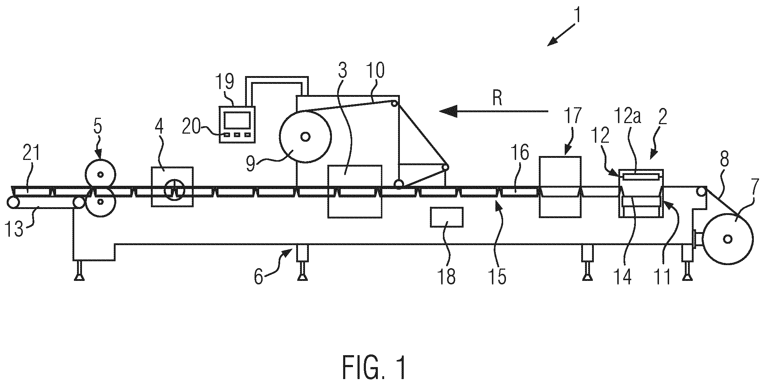

Figur 1 zeigt in schematischer Ansicht eine Verpackungsmaschine 1, die, wie im vorliegenden Ausführungsbeispiel, eine Tiefziehverpackungsmaschine sein kann. Die Verpackungsmaschine 1 kann eine Formstation 2, eine Siegelstation 3, eine Querschneideinrichtung 4 und eine Längsschneideinrichtung 5 aufweisen. Diese können in der genannten Reihenfolge in einer Arbeitsrichtung R an einem Maschinengestell 6 angeordnet sein. Darüber hinaus kann stromabwärts der Formstation 2 eine Leckageerkennungsstation 17 angeordnet sein.

Eingangsseitig kann an dem Maschinengestell 6 eine Zufuhrrolle 7 vorgesehen sein, von der eine erste Verpackungsfolie 8 abgezogen werden kann. Im Bereich der Siegelstation 3 kann ein Folienspeicher 9 vorgesehen sein, von dem eine zweite Verpackungsfolie 10 als Deckelfolie abgezogen werden kann. Ausgangsseitig kann an der Verpackungsmaschine 1 eine Abfuhreinrichtung 13, z. B. in Form eines Transportbandes, vorgesehen sein, mit der fertige, vereinzelte Verpackungen 21 abtransportiert werden können. Ferner kann die Verpackungsmaschine 1 eine nicht dargestellte Vorschubeinrichtung aufweisen, welche die erste Verpackungsfolie 8 ergreifen und vorzugsweise in einem Hauptarbeitstakt taktweise in der Arbeitsrichtung R weitertransportieren kann. Die Vorschubeinrichtung kann zum Beispiel durch seitlich angeordnete Transportketten, vorzugsweise Klammerketten, realisiert sein.

Wie in der dargestellten Ausführungsform gezeigt, kann die Formstation 2 als eine Tiefziehstation ausgebildet sein. Darin können durch Tiefziehen eine oder mehrere Verpackungsmulden 14 in die erste Verpackungsfolie 8 geformt werden. Dazu kann die Formstation 2 ein Formwerkzeug 11 umfassen.

Das Formwerkzeug 11 kann eine Heizvorrichtung 12 aufweisen. Die Heizvorrichtung 12 kann insbesondere innerhalb des Formwerkzeugs 11 angeordnet sein. Die Heizvorrichtung kann eine Heizplatte 12a aufweisen. Die Heizvorrichtung 12, insbesondere die Heizplatte 12a kann dazu eingerichtet sein, die erste Verpackungsfolie 8 zu erwärmen. Dadurch kann eine bessere plastische Verformbarkeit der ersten Verpackungsfolie 8 erreicht werden.

Die Formstation 2 kann derart ausgebildet sein, dass in einer Richtung senkrecht zur Arbeitsrichtung R mehrere Verpackungsmulden 14 nebeneinander gebildet werden können. In Arbeitsrichtung R hinter der Formstation 2, insbesondere hinter der Leckageerkennungsstation 17, kann eine Einlegestrecke 15 vorgesehen sein. Dort können die in die erste Verpackungsfolie 8 geformten Verpackungsmulden 14 mit Produkt 16 befüllt werden.

Die Siegelstation 3 kann eine verschließbare Kammer aufweisen, in der eine Atmosphäre in den Verpackungsmulden 14 vor dem Versiegeln zum Beispiel durch Gasspülen mit einem Austauschgas oder mit einem Austausch-Gasgemisch ersetzt werden kann.

Die Querschneideinrichtung 4 kann als Stanze ausgebildet sein, welche dazu eingerichtet sein kann, die erste Verpackungsfolie 8 und die zweite Verpackungsfolie 10 in einer Richtung quer zur Arbeitsrichtung R zwischen benachbarten Verpackungsmulden 14 zu durchtrennen. Dabei kann die Querschneideinrichtung 4 derart konfiguriert sein, dass die erste Verpackungsfolie 8 nicht über die gesamte Breite aufgeteilt wird, sondern zumindest in einem Randbereich nicht durchtrennt wird. Dies kann einen kontrollierten Weitertransport durch die Vorschubeinrichtung ermöglichen.

Die Längsschneideinrichtung 5 kann, wie in der dargestellten Ausführungsform, als eine rotierende Rundmesseranordnung ausgebildet sein, mit der die erste Verpackungsfolie 8 und die zweite Verpackungsfolie 10 zwischen benachbarten Verpackungsmulden 14 und am seitlichen Rand der ersten Verpackungsfolie 8 durchtrennt werden kann, wodurch hinter der Längsschneideinrichtung 5 vereinzelte Verpackungen 21 vorliegen können.

Die Verpackungsmaschine 1 kann ferner eine Steuereinheit 18 enthalten. Sie kann dazu konfiguriert sein, die in der Verpackungsmaschine 1 ablaufenden Prozesse zu steuern und/oder zu überwachen. Außerdem kann eine Anzeigevorrichtung 19 vorzugsweise mit Eingabeelementen 20 vorgesehen und dazu eingerichtet sein, Prozessabläufe in der Verpackungsmaschine 1 für bzw. durch einen Bediener zu visualisieren bzw. zu beeinflussen.

Die generelle Arbeitsweise der Verpackungsmaschine 1 kann wie im Folgenden kurz dargestellt ablaufen.

Die erste Verpackungsfolie 8 kann von der Zufuhrrolle 7 abgezogen und durch die Vorschubeinrichtung in die Formstation 2 transportiert werden. In der Formstation 2 können durch Tiefziehen eine oder mehrere Verpackungsmulden 14 in der ersten Verpackungsfolie 8 gebildet werden. Dabei kann die erste Verpackungsfolie 8 zunächst erwärmt werden, vorzugsweise durch eine Heizvorrichtung 12. Das Tiefziehen der Mulde 14 kann durch Einleiten von Druckluft in das Formwerkzeug 11 unterstützt werden. Die Verpackungsmulden 14 können zusammen mit dem umgebenden Bereich der ersten Folie 8 in einem Hauptarbeitstakt schrittweise zu der Leckageerkennungsstation 17 weitertransportiert werden. Dort können sie auf Leckagen geprüft werden, die z.B. beim Formen aufgetreten sein können. Danach können die Verpackungsmulden 14 zu der Einlegestrecke 15 weitertransportiert werden, wo sie mit Produkt 16 befüllt werden können.

Anschließend können die befüllten Verpackungsmulden 14 zusammen mit dem sie umgebenden Bereich der ersten Verpackungsfolie 8 durch die Vorschubeinrichtung in die Siegelstation 3 weitertransportiert werden. Die zweite Verpackungsfolie 10 kann in der Siegelstation 3 als Deckelfolie an die erste Verpackungsfolie 8 angesiegelt werden. Danach kann die zweite Verpackungsfolie 10 mit der Vorschubbewegung der ersten Verpackungsfolie 8 weitertransportiert werden. Dabei kann die zweite Verpackungsfolie 10 von dem Folienspeicher 9 abgezogen werden. Durch das Ansiegeln der Deckelfolie 10 an die Verpackungsmulden 14 können verschlossene Verpackungen 21 entstehen.

In den Schneideinrichtungen 4, 5 können die Verpackungen 21 vereinzelt werden, indem die Verpackungsfolien 8, 10 in Quer- bzw. Längsrichtung durchtrennt werden. Zum Vereinzeln kann anstelle der Schneidvorrichtungen 4, 5 auch eine Komplettschnittvorrichtung (nicht gezeigt) eingesetzt werden, welche die Verpackungen 21 in einem Schritt vereinzeln kann.

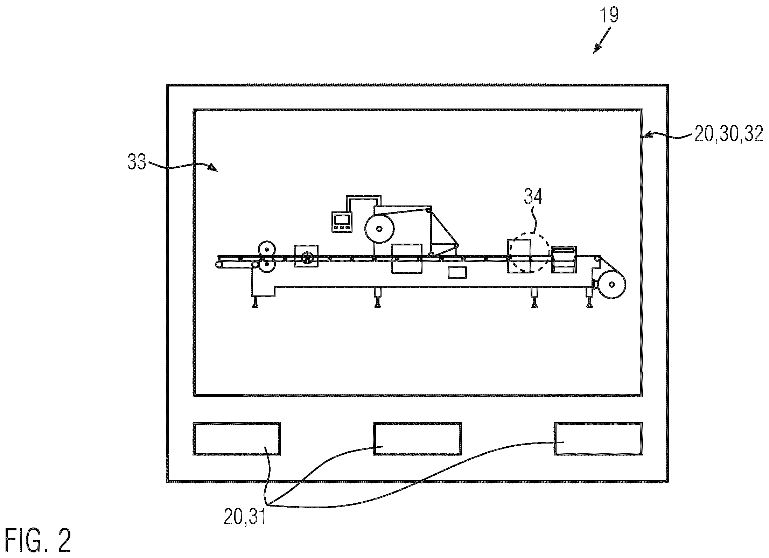

In Figur 2 ist die Anzeigevorrichtung 19 schematisch dargestellt. Wie in Figur 2 gezeigt, kann die Anzeigevorrichtung 19 ein Display 30 umfassen. Des Weiteren kann die Anzeigevorrichtung die Eingabeelemente 20 umfassen. Wie in Figur 2 dargestellt, können die Eingabeelemente 20 in Form von Tasten 31 vorgesehen sein. Alternativ oder zusätzlich kann ein Eingabeelement 20 in Form eines berührungsempfindlichen Displays oder Touchscreens 32 vorgesehen sein. In Figur 2 zeigt die Anzeigevorrichtung 19 eine Lokalisierungsansicht 33 an. Die Lokalisierungsansicht 33 kann eine erste Lokalisierungseingabe 34 eines Benutzers erfordern.

Die erste Lokalisierungseingabe 34 kann einen Fehlerort lokalisieren. Z. B. kann die erste Lokalisierungseingabe 34, wie in Figur 2 dargestellt, eine auf eine Maschinenkomponente der Verpackungsmaschine 1 bezogene Lokalisierungseingabe des Benutzers umfassen. Wie im vorliegenden Beispiel, kann die erste Lokalisierungseingabe 34 auf die Leckageerkennungsstation 17 bezogen sein. Dadurch kann der Fehlerort relativ zu der Leckageerkennungsstation 17 lokalisiert werden. Z. B. kann durch die erste Lokalisierungseingabe 34 angegeben werden, dass vor der Leckageerkennungsstation 17 ein Fehler, bspw. eine fehlerhafte Verpackungsmulde 14, auftritt.

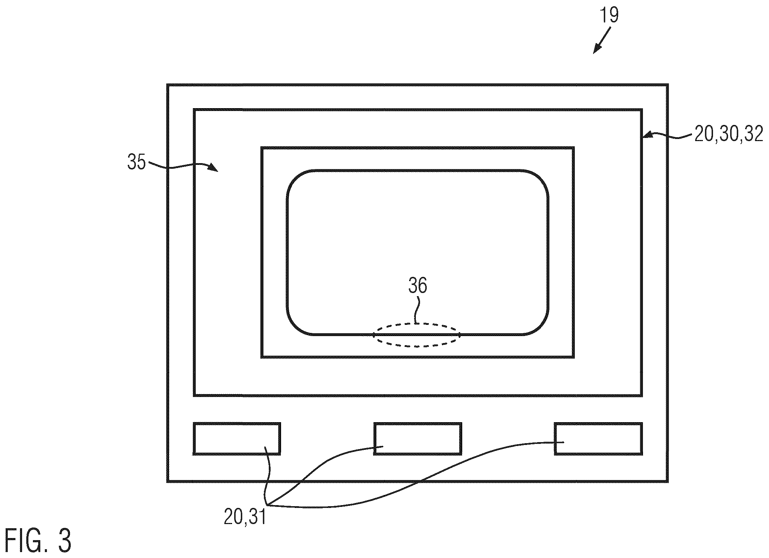

Basierend auf der ersten Lokalisierungseingabe 34 kann eine zweite Lokalisierungsansicht 35 zusammengestellt werden. In Figur 3 ist erneut eine schematische Ansicht der Anzeigevorrichtung 19 dargestellt. In Figur 3 zeigt die Anzeigevorrichtung 19 die zweite Lokalisierungsansicht 35 an. Die zweite Lokalisierungsansicht 35 kann eine zweite Lokalisierungseingabe 36 eines Benutzers erfordern. Die zweite Lokalisierungseingabe 36 kann den Fehlerort lokalisieren und/oder weiter eingrenzen. Z. B. kann die zweite Lokalisierungseingabe 36 eine auf eine durch die Verpackungsmaschine 1 bearbeitbare Verpackung 21 oder Verpackungskomponente bezogene Lokalisierungseingabe des Benutzers umfassen. Wie im vorliegenden Beispiel, kann die zweite Lokalisierungseingabe 36 auf die Verpackungsmulde 14 bezogen sein. Dadurch kann der Fehlerort relativ zu der Verpackungsmulde 14 lokalisiert werden. Z. B. kann durch die zweite Lokalisierungseingabe 36 angegeben werden, dass an einem Übergang zwischen Muldenboden und Muldenwand ein Fehler auftritt. Dies kann, wie in Figur 3 gezeigt, durch eine Berührung des Touchscreens an der Stelle erfolgen, an der sich der Fehlerort in einer angezeigten grafischen Darstellung der Verpackung 21 oder Verpackungskomponente befindet.

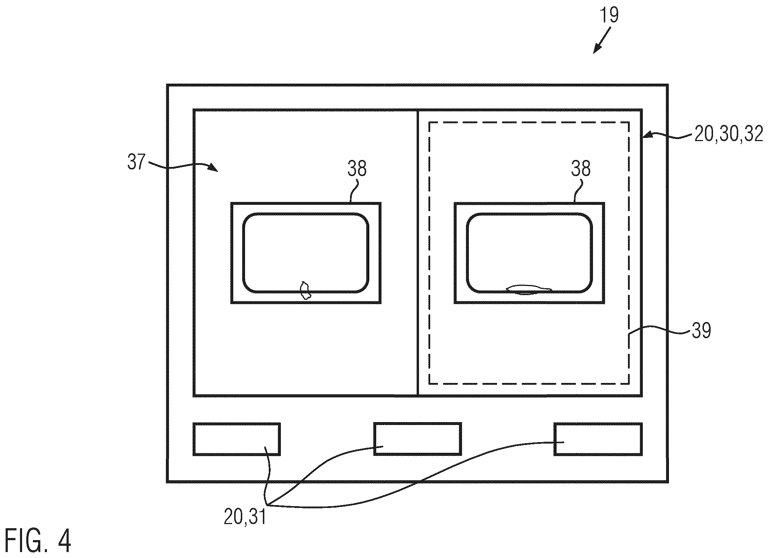

Basierend auf der ersten Lokalisierungseingabe 34 und/oder der zweiten Lokalisierungseingabe 36 kann eine Vergleichsansicht 37 zusammengestellt werden. In Figur 4 ist erneut eine schematische Ansicht der Anzeigevorrichtung 19 dargestellt. In Figur 4 zeigt die Anzeigevorrichtung 19 die Vergleichsansicht 37. Die Vergleichsansicht 37 kann eine oder mehrere (in Figur 4 sind zwei dargestellt) Repräsentationen 38 jeweils einer durch die Verpackungsmaschine 1 bearbeitbaren Verpackung 21 und/oder Verpackungskomponente mit einem Fehler umfassen. Wie im vorliegenden Ausführungsbeispiel, können die Repräsentationen 38 jeweils eine grafische Darstellung einer durch die Verpackungsmaschine 1 bearbeitbaren Verpackung 21 und/oder Verpackungskomponente mit einem Fehler umfassen. Die Vergleichsansicht 37 kann eine Vergleichsauswahl 39 des Benutzers erfordern. Der Benutzer kann die verschiedenen Repräsentationen 38 mit der ihm vorliegenden fehlerhaften Verpackung 21 und/oder Verpackungskomponente vergleichen und durch die Vergleichsauswahl 39 angeben, welche der Repräsentationen 38 der fehlerhaften Verpackung 21 und/oder Verpackungskomponente am nächsten kommt.

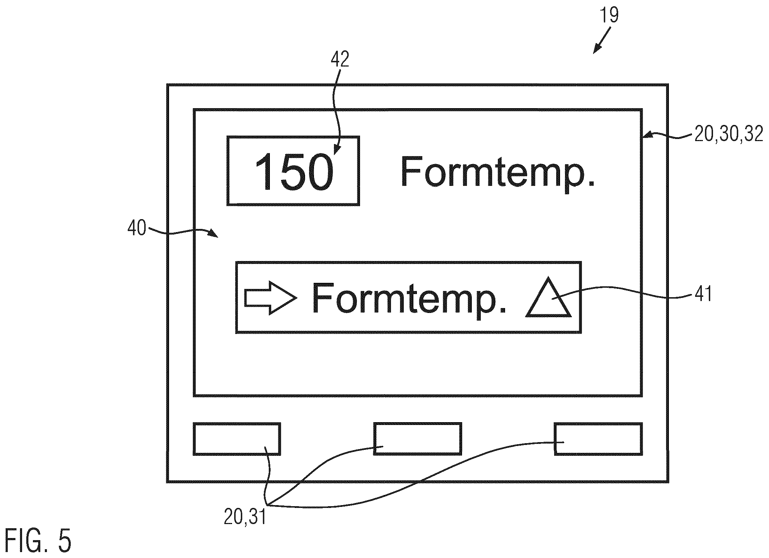

Basierend auf der Vergleichsauswahl 39 kann ein Störungsbehebungsvorschlag 40 angezeigt werden. In Figur 5 ist erneut eine schematische Ansicht der Anzeigevorrichtung 19 dargestellt. In Figur 5 zeigt die Anzeigevorrichtung 19 den Störungsbehebungsvorschlag 40 an. Wie im vorliegenden Ausführungsbeispiel gezeigt, kann das Anzeigen des Störungsbehebungsvorschlags 40 ein Anzeigen eines Änderungsvorschlags 41 eines Betriebsparameters umfassen. In Figur 5 ist als Betriebsparameter beispielhaft eine Formtemperatur dargestellt. Der Änderungsvorschlag 41 kann, wie in Figur 5 ebenfalls beispielhaft dargestellt, eine Grafik umfassen, die einem Benutzer signalisiert, dass die Formtemperatur erhöht werden sollte. Wie in Figur 5 ebenfalls dargestellt, kann das Anzeigen des Störungsbehebungsvorschlags 40 zusätzlich Anzeigen eines Ist-Wertes 42 des Betriebsparameters umfassen. Entsprechend kann das Verfahren ein Erfassen des Ist-Wertes 42 des Betriebsparameters, im vorliegenden Ausführungsbeispiel der Formtemperatur, umfassen. Es kann vorteilhaft sein, wenn der erfasste Ist-Wert 42 bei der Zusammenstellung des Störungsbehebungsvorschlags 41 berücksichtigt wird.

## Patentansprüche

1. Verfahren zum Diagnostizieren einer Störung des Betriebs einer Verpackungsmaschine (1), die eine Anzeigevorrichtung (19) umfasst, wobei das Verfahren umfasst:
Anzeigen einer Lokalisierungsansicht (33) durch die Anzeigevorrichtung (19), wobei die Lokalisierungsansicht (33) eine erste Lokalisierungseingabe (34) eines Benutzers erfordert, und wobei die erste Lokalisierungseingabe (34) einen Fehlerort lokalisiert,
Zusammenstellen einer Vergleichsansicht (37) basierend auf der ersten Lokalisierungseingabe (34) des Benutzers, wobei die Vergleichsansicht (37) eine oder mehrere Repräsentationen (38) jeweils einer durch die Verpackungsmaschine (1) bearbeitbaren Verpackung (21) oder Verpackungskomponente mit einem Fehler umfasst,
Anzeigen der Vergleichsansicht (37) durch die Anzeigevorrichtung (19), wobei die Vergleichsansicht (37) eine Vergleichsauswahl (39) des Benutzers erfordert, und wobei die Vergleichsauswahl (39) eine aus der einen oder mehreren Repräsentationen (38) angibt,
Anzeigen mindestens eines Störungsbehebungsvorschlags (40) basierend auf der Vergleichsauswahl (39) durch die Anzeigevorrichtung (19).

2. Verfahren nach Anspruch 1, wobei jede der einen oder mehreren Repräsentationen (38) eine grafische Darstellung und/oder eine Textbeschreibung jeweils einer durch die Verpackungsmaschine (1) bearbeitbaren Verpackung (21) oder Verpackungskomponente mit einem Fehler umfasst.

3. Verfahren nach Anspruch 1 oder 2, wobei die Lokalisierungsansicht (33) erfordert, dass die erste Lokalisierungseingabe (34) eine auf eine Maschinenkomponente der Verpackungsmaschine (1) bezogene Lokalisierungseingabe des Benutzers umfasst.

4. Verfahren nach einem der vorangehenden Ansprüche, wobei die Lokalisierungsansicht (33) erfordert, dass die erste Lokalisierungseingabe (34) eine auf eine durch die Verpackungsmaschine (1) bearbeitbare Verpackung (21) oder Verpackungskomponente bezogene Lokalisierungseingabe des Benutzers umfasst.

5. Verfahren nach einem der vorangehenden Ansprüche, des Weiteren umfassend Anzeigen einer zweiten Lokalisierungsansicht (35) durch die Anzeigevorrichtung (19), wobei die zweite Lokalisierungsansicht (25) eine zweite Lokalisierungseingabe (36) des Benutzers erfordert, und wobei die zweite Lokalisierungseingabe (36) einen Fehlerort lokalisiert.

6. Verfahren nach Anspruch 5, wobei die zweite Lokalisierungsansicht (35) erfordert, dass die zweite Lokalisierungseingabe (36) eine auf eine Maschinenkomponente der Verpackungsmaschine (1) und/oder auf eine durch die Verpackungsmaschine (1) bearbeitbare Verpackung (21) oder Verpackungskomponente bezogene Lokalisierungseingabe des Benutzers umfasst.

7. Verfahren nach Anspruch 5 oder 6, wobei das Verfahren des Weiteren Zusammenstellen der zweiten Lokalisierungsansicht (35) basierend auf der ersten Lokalisierungseingabe (34) umfasst.

8. Verfahren nach einem der vorangehenden Ansprüche, des Weiteren umfassend Erfassen eines Ist-Wertes (42) eines Betriebsparameters der Verpackungsmaschine (1).

9. Verfahren nach Anspruch 8, wobei das Anzeigen des mindestens einen Störungsbehebungsvorschlags (40) basierend auf dem erfassten Ist-Wert (42) des Betriebsparameters erfolgt.

10. Verfahren nach Anspruch 8 oder 9, wobei das Anzeigen des mindestens einen Störungsbehebungsvorschlags (40) Anzeigen des Ist-Wertes (42) des Betriebsparameters umfasst.

11. Verfahren nach einem der Ansprüche 8 bis 10, wobei das Anzeigen des mindestens einen Störungsbehebungsvorschlags (40) Anzeigen eines Änderungsvorschlags (41) des Betriebsparameters umfasst.

12. Verpackungsmaschine (1), die zum Ausführen eines Verfahrens nach einem der vorangehenden Ansprüche konfiguriert ist.
